# EUROPEAN PATENT SPECIFICATION

(11) **EP 3 425 297 B1**
(45) Date of publication and mention of the grant of the patent: **07.04.2021**
(21) Application number: 17759546.9
(22) Date of filing: 03.02.2017
(51) Int. Cl.: F25B 1/00, G06K 19/07, G08C 15/00, G08C 17/02

(54) **AIR CONDITIONING SYSTEM**
KLIMATISIERUNGSSYSTEM
SYSTÈME DE CLIMATISATION

(30) Priority: 29.02.2016 JP 2016037363
(43) Date of publication of application: 09.01.2019
(73) Proprietor: Mitsubishi Heavy Industries, Ltd., Tokyo 108-8215 (JP)
(72) Inventor: ENYA, Atsushi, Tokyo 108-8215 (JP)
(74) Representative: Cabinet Beau de Loménie
(86) International application number: PCT/JP2017/004080
(87) International publication number: WO 2017/150075

(56) References cited:
- WO-A1-2015/111203
- JP-A- H06 265 191
- JP-A- H11 237 099
- JP-A- 2012 021 697
- JP-A- 2012 130 246
- JP-A- 2012 172 912
- US-A1- 2006 259 276
- US-A1- 2011 023 515

## Description

### Technical Field

The present invention relates to an air conditioning system.

### Background Art

In the related art, for example, multi-type air conditioning systems in which one outdoor unit and a plurality of indoor units are connected to each other is known. In the multi-type air conditioning systems, the number of indoor units to be connected to the outdoor unit can be freely selected and changed as long as the number is within an installation limit.

### Citation List

### Patent Literature

[PTL 1] Japanese Unexamined Patent Application Publication No. 2006-172426
[PTL 2] Japanese Unexamined Patent Application Publication No. 2011-226694
[PTL 3] Japanese Unexamined Patent Application Publication No. 11-7472
[PTL 4] Japanese Unexamined Patent Application Publication No. 11-337149

JP2012021697 discloses an air conditioning system. JPH06265191 discloses an air conditioning management system.

### Summary of Invention

### Technical Problem

In the multi-type air conditioning systems, in order to enhance versatility, standard set values of control parameters of an air conditioning control is determined supposing as many installation situations as possible. For this reason, among the control parameters, a control parameter that is not necessarily optimized is included in an individual installation situation, which results in a decrease in heating and cooling capacity or an increase in power consumption.

The invention has been made in view of the above-described problems, and an object thereof is to provide an air conditioning system capable of improving heating and cooling capacity and saving energy.

### Solution to Problem

A first aspect of the invention is defined in Claim 1.

According to the above air conditioning system, the information relating to the state of the refrigerant or the state of the device or the state of the functional component provided in the outdoor unit or the indoor unit is detected by the at least one sensor. The short-distance wireless device connected to the at least one sensor and receives the sensor information detected by the connected sensor. The short-distance wireless device transmits the received sensor information or the information relating to the sensor information to the air conditioning control device. The air conditioning control device includes the control parameter changing unit, and the control parameter of the air conditioning control is changed on the basis of the sensor information or the information relating to the sensor information by the control parameter changing unit. In this way, since the control parameter of the air conditioning control is changed on the basis of the sensor information or the information relating to the sensor information, it is possible to optimize the control parameter in units of individual air conditioning systems.

According to the above air conditioning system, in a case where the abnormality is detected by the abnormality detection unit provided in the short-distance wireless device, the abnormality signal capable of specifying the detected abnormality is transmitted to the air conditioning control device. In this way, whether not there is an abnormality is determined within the short-distance wireless device, and the abnormality signal is transmitted from the short-distance wireless device to the air conditioning control device. Thus, as compared to a case where the sensor information is transmitted as it is, it is possible to reduce the data communication volume between the short-distance wireless device and the air conditioning control device.

In the above air conditioning system, in a case where a plurality of the indoor units are connected to the outdoor unit, the short-distance wireless device may transmit positional information in addition to the sensor information or the information relating to the sensor information, and the air conditioning control device may specify a positional relationship between the indoor units on the basis of the positional information, and changes the control parameter of at least one of the indoor units in accordance with the specified positional relationship.

According to the above air conditioning system, the positional information on the short-distance wireless device is transmitted to the air conditioning control device in addition to the sensor information or the information relating to the sensor information. In the air conditioning control device, the positional relationship between the indoor units is specified on the basis of the received positional information, and the control parameter of at least one indoor unit is changed in accordance with to the specified positional relationship. For example, in specific control contents (for example, non-heating preventing control) or the like, it may be better to determine the priority of control in accordance with an arrangement position between air conditioners. In such a case, by providing the positional information from the short-distance wireless device to the air conditioning control device, an installation relationship between the indoor units in the air conditioning control device can be ascertained, and it is possible to set a suitable priority. Accordingly, it is possible to effectively execute the specific control contents in which the positional relationship also become important.

In the above air conditioning system, the air conditioning control device may include the storage unit that stores the information received from the short-distance wireless device.

According to the above air conditioning system, the air conditioning control device is provided with the storage unit that stores the information received from the short-distance wireless device. For example, by reading and analyzing the data stored in this storage unit, it is possible to estimate the replacement timing of each device or valve, or it is possible to suggest a device of a suitable specification according to the installation state of the air conditioning system at the updating timing of the device.

In the above air conditioning system, the air conditioning control device may include a failure determination unit that performs a failure determination on the basis of the information stored in the storage unit.

In the above air conditioning system, the air conditioning control device is provided with the failure determination unit that performs the failure determination of the device or the valve on the basis of the information stored in the storage unit. Thus, the failure of the device or the valve can be easily ascertained in an early stage.

In the above air conditioning system, the outdoor unit may include a liquid bypass pipe that supplies a liquid refrigerant output from an outdoor heat exchanger to a suction-side pipe of a compressor, and a liquid bypass valve provided in the liquid bypass pipe, the short-distance wireless device may receive opening-closing information on the liquid bypass valve as the sensor information, and the control parameter changing unit may lower a target superheat degree, in a case where the number of times of opening and closing of the liquid bypass valve within a predetermined time is equal to or more than a predetermined number of times.

According to the above air conditioning system, in a case where the liquid bypass valve frequently repeats its opening and closing, a change for lowering the target superheat degree is performed. The liquid bypass valve is, for example, a valve brought into an open state in a case where the oil temperature inside the compressor has a predetermined value or higher. By bringing the liquid bypass valve into the open state, the liquid refrigerant is supplied to the suction-side pipe of the compressor. Accordingly, the temperature of the compressor can be lowered. In a case where the liquid bypass valve is frequently opened and closed, an excessive overheating operation can be determined to be performed. Thus, by changing a setting in the direction in which the target superheat degree is lowered in a case where excessive opening and closing of the liquid bypass valve are detected, the liquid amount of the circulating refrigerant can be lowered, and the overheating of the compressor can be relaxed. Accordingly, it is possible to return the opening and closing frequency of the liquid bypass valve to a normal value. By escaping from the overheating operational state, for example, it is possible to extend the service life of the compressor and various valves.

In the above, air conditioning system, the outdoor unit may include a hot gas bypass pipe that connects a discharge-side pipe of a compressor and an inlet-side pipe of an outdoor heat exchanger during heating to each other, and a hot gas bypass valve provided in the hot gas bypass pipe, the short-distance wireless device may receive opening-closing information on the hot gas bypass valve as the sensor information, and the control parameter changing unit may raise a target superheat degree or lowers a rotational speed of an outdoor fan, in a case where the number of times of opening and closing of the hot gas bypass valve within a predetermined time is equal to or more than a predetermined number of times.

According to the above air conditioning system, in a case where the hot gas bypass valve frequently repeats its opening and closing, a change for raising the target superheat degree or lowering the rotational speed of the outdoor fan is performed. The hot gas bypass valve is a valve that mainly operates during heating, and operates in a case where the capacity of the compressor becomes excessive with respect to a load. By opening the hot gas bypass valve, portion of the gas refrigerant discharged from the compressor is returned to an inlet side of the outdoor exchanger through the hot gas bypass pipe. Accordingly, the air conditioning control according to the load becomes possible. A situation where the hot gas bypass valve frequently repeats opening and closing, the compressor can be determined to perform an excessive operation with respect to the load. Thus, by changing a setting in the direction in which the target superheat degree is raised in a case where excessive opening and closing of the hot gas bypass valve are detected, the density of the circulating refrigerant gas is lowered. Accordingly, the mass flow rate of the circulating refrigerant gas can be lowered, and it is possible to lower a frequency at which the hot gas bypass valve is opened. By performing such a control, for example, it is possible to extend the service life of the various valves, prevent excessive degradation of oil, and save energy.

In the above air conditioning system, the outdoor unit may include a heating expansion valve, the indoor unit may include a cooling expansion valve, the short-distance wireless device may receive valve opening degree information on the heating expansion valve as the sensor information, and the control parameter changing unit may lower a target supercooling degree, in a case where the number of times at which the valve opening degree of the heating expansion valve exceeds a predetermined threshold value is equal to or more than a predetermined number of times within a predetermined time.

According to the above air conditioning system, in a case where the valve opening degree of the heating expansion valve is controlled to be more slightly open than usual, a change for lowering the target supercooling degree is performed. By lowering the target supercooling degree, the opening degree of the cooling expansion valve provided within the indoor unit can be made more slightly open than usual, it is possible to increases the flow rate of the circulating refrigerant. Accordingly, it is possible to lower the valve opening degree of the heating expansion valve, and it is possible to return the valve opening degree to a normal value. By performing such a control, for example, it is possible to extend the service life of the compressor, prevent excessive degradation of oil, and save energy.

In the air conditioning system, the outdoor unit may include a heating expansion valve, the indoor unit includes a cooling expansion valve, the short-distance wireless device may receive valve opening degree information on the cooling expansion valve as the sensor information, and the control parameter changing unit may lower a rotational speed of an outdoor fan in a case where the number of times at which the valve opening degree of the cooling expansion valve exceeds a predetermined threshold value is equal to or more than a predetermined number of times within a predetermined time.

According to the above air conditioning system, in a case where the valve opening degree of the cooling expansion valve is controlled to be more slightly open than usual, a change for lowering the rotational speed of the outdoor fan to a predetermined value is performed. The pressure of the circulating refrigerant gas can be raised by lowering the rotational speed of the outdoor fan. Accordingly, it is possible to lower the valve opening degree of the cooling expansion valve, and it is possible to return the valve opening degree to a normal value. By performing such a control, for example, it is possible to secure cooling performance and save energy.

In the air conditioning system, the outdoor unit may include at least one of a discharge temperature sensor that detects a temperature on a refrigerant discharge side of a compressor, a suction temperature sensor that detects a temperature on a refrigerant suction side of the compressor, and a below-dome temperature sensor that detects a temperature of below a dome of the compressor, the short-distance wireless device may receive temperature information of at least any of the discharge temperature sensor, the suction temperature sensor, and the below-dome temperature sensor provided in the outdoor unit as the sensor information, and the control parameter changing unit may lower a target superheat degree, in a case where the number of times at which the temperature exceeds a predetermined threshold value is equal to or more than a predetermined number of times within a predetermined time.

According to the above air conditioning system, the sensor information from at least any one of the discharge temperature sensor, the suction temperature sensor, and the below-dome temperature sensor is received by the short-distance wireless device. The short-distance wireless device transmits the received sensor information or the information relating to the received sensor information to the air conditioning control device. The control parameter changing unit within the air conditioning control device perform a change for lowering the target superheat degree in a case where the temperature detected by the temperature sensor is abnormal. Accordingly, the liquid amount of the circulating refrigerant can be raised, and it is possible to lower the discharge-side temperature or the like of the compressor. By performing such a control, for example, it is possible to extend the service life of the compressor and prevent excessive degradation of oil.

A second aspect of the invention is defined in Claim 9 and further possible features in dependent Claims 10 and 11. A third aspect of the invention is defined in Claim 12. Advantageous Effects of Invention

According to the invention, the effects of improving heating and cooling capacity and saving energy can be exhibited.

### Brief Description of Drawings

Fig. 1 is a view schematically illustrating a refrigerant system related to a first embodiment of the invention.
Fig. 2 is an electrical configuration diagram of the air conditioning system related to the first embodiment of the invention.
Fig. 3 is a functional block diagram illustrating functions realized by an RFID tag and an air conditioning control device related to the first embodiment of the invention.
Fig. 4 is an illustrative view for illustrating an air conditioning system related to a second embodiment of the invention.

### Description of Embodiments

### [First Embodiment]

Hereinbelow, an air conditioning system related to a first embodiment of the invention will be described with reference to the drawings.

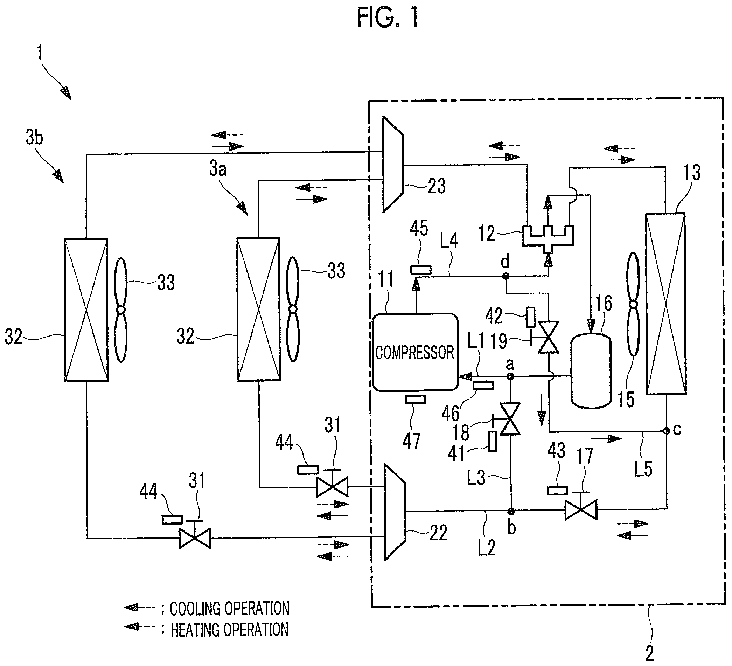

Fig. 1 is a view illustrating schematically a refrigerant system of the air conditioning system 1 related to the present embodiment. As illustrated in Fig. 1, the air conditioning system 1 includes one outdoor unit 2, and a plurality of indoor units 3a and 3b connected to the outdoor unit 2 by a common refrigerant pipe. Although a configuration in which two indoor units 3a and 3b are connected to one outdoor unit 2 is illustrated for convenience in Fig. 1, the number of outdoor units to be installed and the number of indoor units to be connected are not limited.

The outdoor unit 2 includes, for example, a compressor 11 that compresses and delivers a refrigerant, a four-way valve 12 that switches a circulation direction of the refrigerant, an outdoor heat exchanger 13 that performs heat exchange between the refrigerant and ambient air, an outdoor fan 15, an accumulator 16 that is provided on a suction-side pipe L1 of the compressor 11 for the purpose of gas-liquid separation or the like of the refrigerant, an heating expansion valve 17, and the like, as main components.

The indoor units 3a and 3b include an cooling expansion valve 31, an indoor heat exchanger 32, an indoor fan 33, and the like, respectively, as main components.

In such an air conditioning system 1, in the case of a cooling operation, the refrigerant delivered from the outdoor unit 2 is allowed to be branched and supplied to the indoor units 3a and 3b by a header 22, and the return refrigerant from the indoor units 3a and 3b are allowed to be joined together in a header 23 and supplied to the outdoor unit 2. During heating, a reverse refrigerant flow is formed.

The outdoor unit 2 includes a liquid bypass pipe L3 that connects a connection point a provided in the suction-side pipe L1 connecting the accumulator 16 and the compressor 11 and a connection point b provided in a refrigerant pipe L2 connecting the outdoor heat exchanger 13 and the header 22, and a hot gas bypass pipe L5 that connects a connection point c provided in the refrigerant pipe L2 and a connection point d provided in a discharge-side pipe L4 of the compressor 11. The liquid bypass pipe L3 is provided with a liquid bypass valve 18, and the hot gas bypass pipe L5 is provided with a hot gas bypass valve 19.

The air conditioning system 1 is provided with a plurality of sensors that detect information relating to the operational states of various devices provided in the outdoor unit 2 and the individual indoor units 3a and 3b. As an example, the air conditioning system 1 is provided with a valve opening-closing sensor (for example, an ON/OFF switch) 41 that detects the opening and closing of the liquid bypass valve 18, a valve opening-closing sensor 42 (for example, an ON/OFF switch)that detects opening and closing of the hot gas bypass valve 19, a valve opening degree sensor 43 that detects the valve opening degree of the heating expansion valve 17, a valve opening degree sensor 44 that detects the valve opening degree of the cooling expansion valve 31, a discharge-side temperature sensor 45 that measures the discharge-side temperature of the compressor 11, a suction-side temperature sensor 46 that measures the suction-side temperature of the compressor 11, and a below-dome temperature sensor 47 that measures a below-dome temperature of the compressor, and the like.

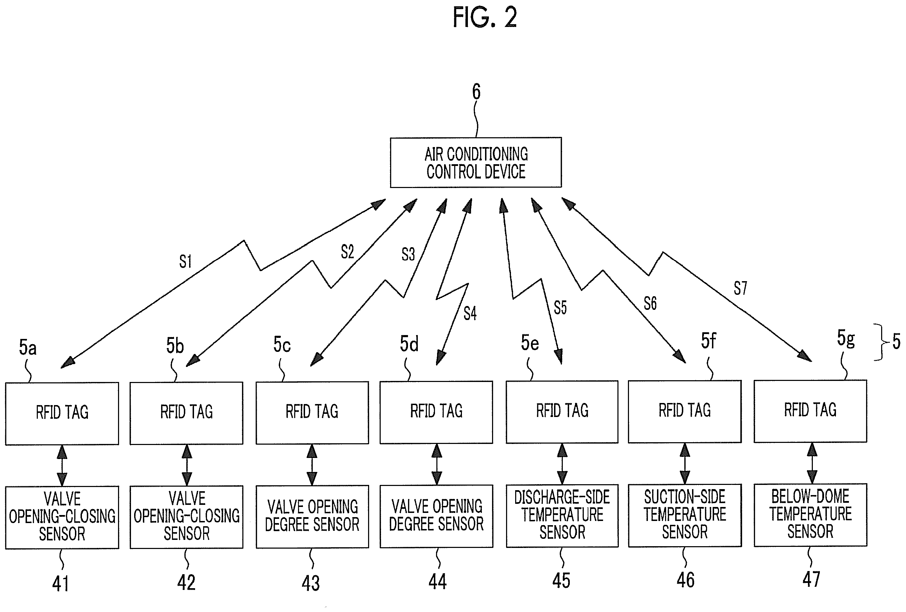

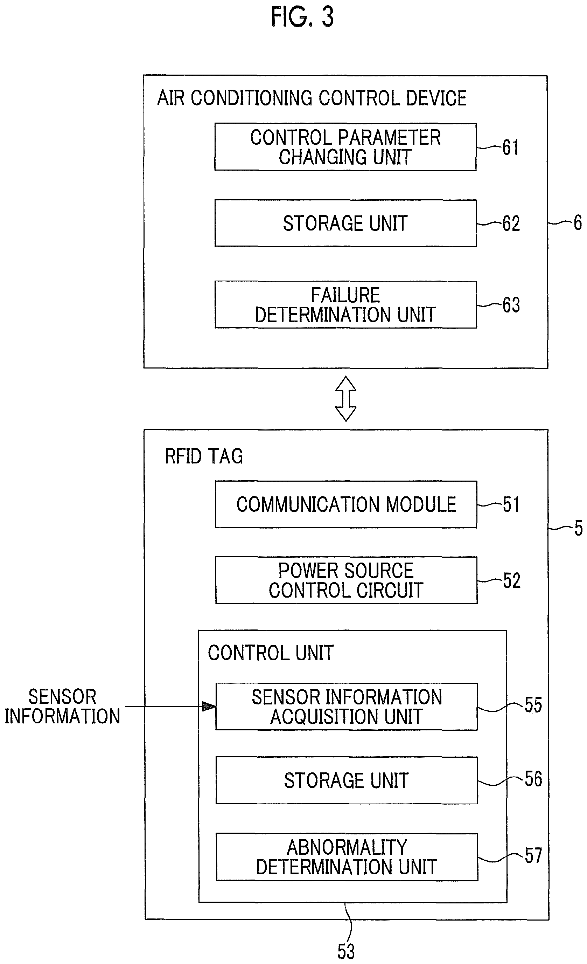

Fig. 2 is a view illustrating an electrical configuration of the air conditioning system related to the present embodiment, and Fig. 3 is a view illustrating RFID tags 5 (hereinafter, reference sign "5" is simply attached when referring to all the RFID tags, and reference signs "5a", "5b", and the like are attached when referring to the individual RFID tags) related to the present embodiment.

As illustrated in Fig. 2, the RFID tags 5 are connected to the various sensors 41 to 47, respectively. Although a case where the sensors 41 to 47 and the RFID tags 5 are connected to each other in a one-to-one relationship will be described in the present embodiment, the invention is not limited to this aspect. For example, one RFID tag 5 may be provided corresponding to a plurality of sensors, or the RFID tags 5 may be provided for the outdoor unit 2 and the indoor units 3a and 3b, respectively.

As illustrated in Fig. 2, for example, the RFID tags 5a to 5g are respectively provided corresponding to the valve opening-closing sensor 41, the valve opening-closing sensor 42, the valve opening degree sensor 43, the valve opening degree sensor 44, the discharge-side temperature sensor 45, the suction-side temperature sensor 46, and the below-dome temperature sensor 47.

As illustrated in Fig. 3, each RFID tag 5 includes a communication module (wireless communication unit) 51, a power source control circuit 52, and a control unit 53. The RFID tag 5 is of, for example, an active tag type, and wirelessly performs transfer of information with the air conditioning control device 6 via the communication module 51. The power source control circuit 52 converts, for example, electrical power supplied from a power source within the air conditioning system 1 into a suitable voltage or the like to supply the converted voltage to the communication module 51 or the control unit 53.

The control unit 53 includes a sensor information acquisition unit 55, a storage unit 56, and an abnormality detection unit 57. The sensor information acquisition unit 55 receives, for example, sensor information from the sensors connected thereto by wire. Information relating to the connected sensors, and various conditions, threshold values, and the like that the abnormality detection unit 57 uses for determination are stored in the storage unit 56. The abnormality detection unit 57 performs abnormality determination on the basis of the received sensor information and transmits an abnormality signal to the air conditioning control device 6 via the communication module 51 in a case where the determination result is determined to be abnormal. In a case where a communication state is not good, and information cannot be directly transmitted from the RFID tag 5 to the air conditioning control device 6, a repeater may be installed on a communication path.

The air conditioning control device 6 comprehensively performs the operation control of the air conditioning system 1, and realizes, for example, a cooling operation, a heating operation, a defrosting operation, and the like by executing a predetermined program. The air conditioning control device 6 also executes an optimization control of changing control parameters on the basis of abnormality signals received from the RFID tags 5 (5a to 5g) in addition to performing, for example, rotational speed control of a compressor 11, rotational speed control of the outdoor fan 15, valve opening degree control of the heating expansion valve 17, rotational speed control of the indoor fan 33, valve opening degree control of the cooling expansion valve 31, and the like.

The air conditioning control device 6 includes, for example, a control parameter changing unit 61, the storage unit 62, and a failure determination unit 63, as components relating to the optimization control. The control parameter changing unit 61 changes the control parameters in accordance with received abnormality signals in a case where the abnormality signals are received from the RFID tags 5. The storage unit 62 stores abnormality information received from the RFID tags 5. The failure determination unit 63 performs failure determination on the basis of the information stored in the storage unit 62.

Next, the optimization control of the control parameters related to the present embodiment will be described in detail with reference to Figs. 2 and 3.

The RFID tag 5a acquires information relating to the opening and closing of the liquid bypass valve 18 from the valve opening-closing sensor 41. For example, in a case where the liquid bypass valve 18 is open, an ON signal (a digital signal "1") is input, and in a case the liquid bypass valve 18 is closed, an OFF signal (a digital signal "0") is input. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times of opening and closing of the liquid bypass valve 18 is equal to or more than a predetermined number of times within a predetermined period, for example, in a case where the opening and closing of the liquid bypass valve 18 are performed 10 times or more in 1 hour, an abnormality is determined. In a case where the abnormality is detected by the abnormality detection unit 57, an abnormality signal S1 is transmitted to the air conditioning control device 6 via the communication module 51. In the air conditioning control device 6, the abnormality signal S1 is input to the control parameter changing unit 61. The control parameter changing unit 61 lowers a target superheat degree to a predetermined value in a case where the abnormality signal S1 is received. For this reason, the air conditioning control device 6 perform an air conditioning control on the basis of the target superheat degree after change.

The liquid bypass valve 18 is a valve brought into an open state in a case where the oil temperature inside the compressor 11 has a predetermined value or higher. By bringing the liquid bypass valve 18 into the open state, a liquid refrigerant is supplied to the suction-side pipe L1 of the compressor 11. For this reason, the temperature of the compressor 11 can be lowered. In a case where the liquid bypass valve 18 is frequently opened and closed, an excessive overheating operation can be determined to be performed. Thus, in a case where excessive opening and closing of the liquid bypass valve 18 are detected, as described above, a setting is changed in a direction in which the target superheat degree is lowered. By changing the setting, the liquid amount of the circulating refrigerant can be lowered, and overheating of the compressor 11 can be relaxed. As a result, it is possible to return the opening and closing frequency of the liquid bypass valve 18 to a normal value. By escaping from the overheating operational state, for example, it is possible to extend the service life of the compressor 11 and the various valves. The setting of the target superheat degree is continuously changed until the abnormality signal S1 is no longer received from the RFID tag 5a.

The RFID tag 5b acquires information relating to the opening and closing of the hot gas bypass valve 19 from the valve opening-closing sensor 42. For example, in a case where the hot gas bypass valve 19 is open, an ON signal (a digital signal "1") is input, and in a case the hot gas bypass valve 19 is closed, an OFF signal (a digital signal "0") is input. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times of opening and closing of the hot gas bypass valve 19 is equal to or more than a predetermined number of times within a predetermined period, for example, in a case where the opening and closing of the hot gas bypass valve 19 are performed 10 times or more in 1 hour, an abnormality is determined. In a case where the abnormality is detected by the abnormality detection unit 57, an abnormality signal S2 is transmitted to the air conditioning control device 6 via the communication module 51. In the air conditioning control device 6, the abnormality signal S2 is input to the control parameter changing unit 61. The control parameter changing unit 61 lowers the target superheat degree to the predetermined value in a case where the abnormality signal S2 is received. Accordingly, the air conditioning control device 6 perform the air conditioning control on the basis of the target superheat degree after change.

The hot gas bypass valve 19 is a valve that mainly operates during heating, and operates in a case where the capacity of the compressor 11 becomes excessive with respect to a load. By opening the hot gas bypass valve 19, portion of the gas refrigerant discharged from the compressor 11 is returned to an inlet side (connection point c) of the outdoor heat exchanger 13 through the hot gas bypass pipe L5. Accordingly, the air conditioning control according to the load becomes possible. A situation where the hot gas bypass valve 19 frequently repeats opening and closing, the compressor 11 can be determined to perform an excessive operation with respect to the load. Thus, in a case where excessive opening and closing of the hot gas bypass valve 19 are detected, a setting is changed in a direction in which the target superheat degree is raised. Accordingly, the density of the circulating refrigerant gas can be lowered. As a result, the mass flow rate of the circulating refrigerant gas can be lowered, and it is possible to lower a frequency at which the hot gas bypass valve 19 is opened.

The rotational speed of the outdoor fan 15 can be lowered instead of the control change for raising the target superheat degree. By lowering the rotational speed of the outdoor fan 15, the superheat degree can be raised, and it is possible to lower the density of the circulating refrigerant gas. Accordingly, it is possible to obtain the same effect as raising the target superheat degree.

Such a setting change is continuously performed until the abnormality signal S2 is no longer received from the RFID tag 5b.

The RFID tag 5c acquires valve opening degree information on the heating expansion valve 17 from the valve opening degree sensor 43. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times at which the opening degree of the heating expansion valve 17 exceeds a predetermined threshold value is equal to or more than a predetermined number of times within a predetermined period, for example, in a case where the number of times at which the valve opening degree exceeds 400 pulses is counted 10 times or more in 1 hour in a case where the valve opening degree is detected at intervals of 5 minutes, an abnormality is determined. In a case where the abnormality is detected by the abnormality detection unit 57, an abnormality signal S3 is transmitted to the air conditioning control device 6 via the communication module 51. In the air conditioning control device 6, the abnormality signal S3 is input to the control parameter changing unit 61. The control parameter changing unit 61 lowers a target supercooling degree to a predetermined value in a case where the abnormality signal S3 is received. Accordingly, the air conditioning control device 6 performs the air conditioning control on the basis of the target supercooling degree after change.

As a result, it is possible to perform control in a direction in which the valve opening degree of the cooling expansion valve 31 provided on a refrigerant flow upstream side of the heating expansion valve 17, and it is possible to increase the flow rate of the refrigerant to be circulated. Accordingly, it is possible to lower the valve opening degree of the heating expansion valve 17, and it is possible to return the valve opening degree to a normal value.

The RFID tag 5d acquires valve opening degree information on the cooling expansion valve 31 from the valve opening degree sensor 44. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times at which the opening degree of the cooling expansion valve 31 exceeds a predetermined threshold value is equal to or more than a predetermined number of times within a predetermined period, for example, in a case where the number of times at which the valve opening degree exceeds 400 pulses is counted 10 times or more in 1 hour in a case where the valve opening degree is detected at intervals of 5 minutes, an abnormality is determined. In a case where the abnormality is detected by the abnormality detection unit 57, an abnormality signal S4 is transmitted to the air conditioning control device 6 via the communication module 51. In the air conditioning control device 6, the abnormality signal S4 is input to the control parameter changing unit 61. The control parameter changing unit 61 lowers the rotational speed of the outdoor fan 15 to a predetermined value in a case where the abnormality signal S4 is received. Accordingly, the pressure of the circulating refrigerant gas can be raised, it is possible to lower the valve opening degree of the cooling expansion valve 31, and it is possible to return the valve opening degree to a normal value.

The RFID tag 5e acquires the discharge-side temperature of the compressor 11 from the discharge-side temperature sensor 45. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times at which the discharge-side temperature exceeds a predetermined threshold value is equal to or more than a predetermined number of times within a predetermined period, for example, in a case where the number of times at which the discharge-side temperature exceeds 100°C is counted 10 times or more in 1 hour in a case where the discharge-side temperature is detected at intervals of 5 minutes, an abnormality is determined. In a case where the abnormality is detected by the abnormality detection unit 57, an abnormality signal S5 is transmitted to the air conditioning control device 6 via the communication module 51.

In the air conditioning control device 6, the abnormality signal S5 is input to the control parameter changing unit 61. The control parameter changing unit 61 lowers the target superheat degree to the predetermined value in a case where the abnormality signal S5 is received. Accordingly, the liquid amount of the circulating refrigerant can be raised, and the discharge-side temperature of the compressor 11 can be lowered.

The RFID tag 5f acquires the suction-side temperature of the compressor 11 from the suction-side temperature sensor 46. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times at which the discharge-side temperature exceeds a predetermined threshold value is equal to or more than a predetermined number of times within a predetermined period, for example, in a case where the number of times at which the discharge-side temperature exceeds 20°C is counted 10 times or more in 1 hour in a case where the discharge-side temperature is detected at intervals of 5 minutes, an abnormality is determined. In a case where the abnormality is detected by the abnormality detection unit 57, an abnormality signal S6 is transmitted to the air conditioning control device 6 via the communication module 51. In the air conditioning control device 6, the abnormality signal S6 is input to the control parameter changing unit 61. The control parameter changing unit 61 lowers the target superheat degree to the predetermined value in a case where the abnormality signal S6 is received. Accordingly, the liquid amount of the circulating refrigerant can be raised, and the discharge-side temperature of the compressor 11 can be lowered.

The RFID tag 5g acquires a temperature below a dome of the compressor 11 from the below-dome temperature sensor 47. This sensor information is input to the abnormality detection unit 57 via the sensor information acquisition unit 55. The abnormality detection unit 57 detects an abnormality from the sensor information on the basis of the conditions stored in the storage unit 56. Specifically, in a case where the number of times at which the below-dome temperature exceeds a predetermined threshold value is equal to or more than a predetermined number of times within a predetermined period, for example, in a case where the number of times at which the below-dome temperature exceeds 20°C is counted 10 times or more in 1 hour in a case where the discharge-side temperature is detected at intervals of 5 minutes, an abnormality is determined. In a case where the abnormality is detected by the abnormality detection unit 57, an abnormality signal S7 is transmitted to the air conditioning control device 6 via the communication module 51. In the air conditioning control device 6, the abnormality signal S7 is input to the control parameter changing unit 61. The control parameter changing unit 61 lowers the target superheat degree to the predetermined value in a case where the abnormality signal S7 is received. Accordingly, the liquid amount of the circulating refrigerant can be raised, and the discharge-side temperature of the compressor 11 can be lowered.

As described above, in the air conditioning system 1, in the individual RFID tags 5a to 5g, the sensor information acquisition unit 55 acquires the sensor information from the individual corresponding sensors 41 to 47, and the abnormality detection unit 57 detects abnormalities on the basis of the various conditions stored in the sensor information and the storage unit 56. As a result, in a case where the abnormalities are detected, the abnormality signals S1 to S7 are transmitted to the air conditioning control device 6 via the communication module 51. In the air conditioning control device 6, the abnormality signals S1 to S7 are input to the control parameter changing unit 61, and the control parameters are changed in accordance with the abnormality signals S1 to S7. The changes in the various control parameters in this case, are as described above. In the control parameter changing unit, the control parameters are continuously changed until the abnormality signals S1 to S7 are no longer received.

In the air conditioning control device 6, the abnormality signals S1 to S7 received from the RFID tags 5a to 5g are stored in the storage unit 62, and the failure determination is performed by the failure determination unit 63 on the basis of this stored data. For example, in a case where the same abnormality signals are continuously received a predetermined number of times, it may be determined that there is a problem with a device or construction related to the abnormality signal, and replacement of a component or the like may be reported to a user or a maintenance company.

As described above, according to the air conditioning system 1 related to the present embodiment, the RFID tags 5 that receive the sensor information from at least one sensors 41 to 47 provided within the air conditioning system 1 are provided, and transmits the abnormality signals S1 to S7 to the air conditioning control device 6 from the RFID tags 5 in a case where abnormalities are detected from the sensor information. Since the air conditioning control device 6 changes the various control parameters according to the abnormality received abnormality signals S1 to S6 in a case where the abnormality signals S1 to S6 are received, it is possible to optimize the control parameters in units of individual air conditioning systems. Accordingly, for example, extension of the service life of the compressor 11 and the various valves and energy saving can be expected.

The information on the abnormality signals S1 to S7 received from the RFID tags 5a to 5g is stored in the storage unit 62 of the air conditioning control device 6. By storing the abnormality signals S1 to S7 in this way, it is possible to store what kind of abnormality is detected in which device as the information. Accordingly, by reading and analyzing the information stored in the storage unit 62 during trial operation, maintenance, or the like, it is possible to discover construction defects, component failures, or the like at an early stage. It is also possible to estimate component replacement timing based on the stored information, and it is possible to perform component replacement at suitable timing. Moreover, in a case where the outdoor unit 2, the indoor units 3a and 3b, or a device (for example, the compressor 11 or the like) is changed, it is possible to suggest a device (for example, capacity or the like) of a suitable specification according to the characteristics of an installation location thereof to a user from the values of the abnormality signals stored in the storage unit 62 and the control parameters after change. Accordingly, compared to a case where a device of an exaggerated specification is used, an efficient operation can be realized, and it is possible to save energy.

In the present embodiment, in a case where the control parameters are changed by the control parameter changing unit 61, the control parameters after change may be stored in the storage unit 62, and at the time of the next and subsequent startups, control may be performed using the control parameters after change as standard set values. Accordingly, it is possible to reduce the change frequency of the control parameters.

In the present embodiment, the abnormality signals S1 to S7 are transmitted from the RFID tags 5 to the air conditioning control device 6. However, the sensor information received from the various sensors 41 to 47 may be transmitted.

In the present embodiment, the control parameter changing unit 61 is provided in the air conditioning control device 6, and the control parameter changing unit 61 comprehensively changes the control parameters. However, for example, the individual RFID tags 5a to 5g may also be equipped with the functions of changing the control parameters. In this case, the acquisition of the sensor information, the abnormality detection, and all the changes of the control parameters based on the abnormality detection results are realized by the RFID tags 5a to 5g.

### [Second Embodiment]

Next, an air conditioning system related to a second embodiment of the invention will be illustrated. The air conditioning system related to the present embodiment is different from that of the above-described first embodiment in that the RFID tags 5 transmits positional information to the air conditioning control device 6 instead of or in addition to the abnormality signals S1 to S7.

Hereinafter, points different from the first embodiment will mainly be described, and description of common points will be omitted.

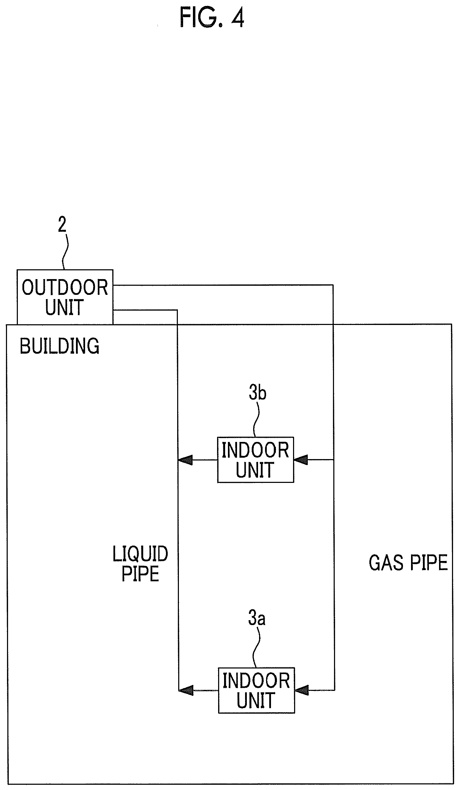

For example, as illustrated in Fig. 4, a case where the outdoor unit 2 is installed at a position (for example, the roof of a building) higher than the indoor units 3a and 3b, and the indoor units 3a and 3b are installed at different height positions, respectively, (for example, the indoor unit 3a is installed on a tenth floor of a building, and the indoor unit 3b is installed on a twentieth floor of the building) is assumed. In this case, during a heating operation, a water head (head) of the refrigerant in a height direction is generated in a liquid pipe of the indoor unit 3a. As a result, indoor liquid discharge of the indoor unit 3a becomes poor, effectiveness of heating becomes very poor compared to the indoor unit 3b installed above, or a heating effect is no longer obtained (hereinafter, such a state is referred to as "non-heating").

In order to prevent such non-heating, generally, the air conditioning control device 6 is equipped with a non-heating preventing control function. However, with the general non-heating preventing control function, the control for solving the non-heating sequentially from an indoor unit that satisfies conditions regarded as the non-heating is performed. Therefore, for example, in a case where the indoor unit 3b satisfies the conditions of the non-heating earlier than the indoor unit 3a, a problem occurs in that the non-heating preventing control is performed on the indoor unit 3b and the non-heating of the indoor unit 3a is not solved at all.

Thus, in the present embodiment, the positional information is transmitted from the RFID tags 5a to 5g to the air conditioning control device 6. Accordingly, the air conditioning control device 6 can specify a positional relationship in the vertical direction between the indoor units and can set the priority of the non-heating preventing control function sequentially from the indoor unit 3a, which is apt to be brought into the non-heating, on the basis of this positional relationship.

Accordingly, it is possible to execute the non-heating preventing control sequentially from the indoor unit 3a that is apt to be brought into the non-heating, and it is possible to solve a situation where the non-heating is not solved at all.

By saving the priority of the non-heating preventing control in the storage unit 62 included in the air conditioning control device 6, the non-heating preventing control function to always meet this priority is executed. In a case where the non-heating preventing control function is executed, a change to a direction in which the valve opening degree of an air conditioning expansion valve included in the indoor unit 3b other than the indoor unit 3a as a target to be non-heated is increased is made. Thus, for example, in order to prevent the non-heating originally, the setting of the valve opening degree of the cooling expansion valve 31 of the indoor unit 3b may be changed to slight opening, and the valve opening degree after change may be stored as a standard setting in the storage unit 62.

Accordingly, the valve opening degree of the cooling expansion valve 31 of the indoor unit 3b is controlled to be more slightly open than usual, and it is possible to reduce the occurrence frequency of the non-heating of the indoor unit 3a installed downstairs.

The invention is not limited only to the above-described embodiments, and various modification can be made, for example, by partially or entirely combining the above-described individual embodiments, without departing from the concept of the invention.

### Reference Signs List

- 1:: air conditioning system
- 2:: OUTDOOR UNIT
- 3a, 3b:: INDOOR UNIT
- 5, 5a TO 5g:: RFID TAG
- 6:: AIR CONDITIONING CONTROL DEVICE
- 11:: COMPRESSOR
- 12:: FOUR-WAY VALVE
- 13:: OUTDOOR HEAT EXCHANGER
- 15:: OUTDOOR FAN
- 16:: ACCUMULATOR
- 17:: HEATING EXPANSION VALVE
- 18:: LIQUID BYPASS VALVE
- 19:: HOT GAS BYPASS VALVE
- 31:: COOLING EXPANSION VALVE
- 32:: INDOOR HEAT EXCHANGER
- 33:: INDOOR FAN
- 41, 42:: VALVE OPENING-CLOSING SENSOR
- 43, 44:: VALVE OPENING DEGREE SENSOR
- 45:: DISCHARGE-SIDE TEMPERATURE SENSOR
- 46:: SUCTION-SIDE TEMPERATURE SENSOR
- 47:: BELOW-DOME TEMPERATURE SENSOR
- 51:: COMMUNICATION MODULE
- 52:: POWER SOURCE CONTROL CIRCUIT
- 53:: CONTROL UNIT
- 55:: SENSOR INFORMATION ACQUISITION UNIT
- 56:: STORAGE UNIT
- 57:: ABNORMALITY DETECTION UNIT
- 61:: CONTROL PARAMETER CHANGING UNIT
- 62:: STORAGE UNIT
- 63:: FAILURE DETERMINATION UNIT
- L1:: SUCTION-SIDE PIPE
- L2:: REFRIGERANT PIPE
- L3:: LIQUID BYPASS PIPE
- L4:: DISCHARGE-SIDE PIPE
- L5:: HOT GAS BYPASS PIPE
- S1 TO S7:: ABNORMALITY SIGNAL

## Claims

1. An air conditioning system (1) in which one outdoor unit (2) and at least one indoor unit (3a, 3b) are connected to each other by a common refrigerant pipe, the air conditioning system (1) comprising:
a plurality of sensors configured to detect information relating to a state of a refrigerant or a state of a device or a valve provided in the outdoor unit (2) or the indoor unit (3a, 3b);
a short-distance wireless device (5) that is connected to at least one of the sensors and is configured to receive sensor information from the connected sensor; and
an air conditioning control device (6) that is provided so as to communicate with the short-distance wireless device (5) and is configured to receive the sensor information or information relating to the sensor information from the short-distance wireless device (5), and
wherein the air conditioning control device (6) includes a control parameter changing unit (61) configured to change a control parameter of an air conditioning control on the basis of the sensor information or the information relating to the sensor information, **characterized in that** the short-distance wireless device (5) includes
an abnormality detection unit (57) for detecting an abnormality on the basis of the sensor information, and
a wireless communication unit configured to transmit an abnormality signal capable of specifying the detected abnormality to the air conditioning control device as the information relating to the sensor information, in a case where an abnormality is detected by the abnormality detection unit (57),
wherein the control parameter changing unit (61) is configured to change the control parameter in accordance with the abnormality signal, in a case where the abnormality signal is received from the short-distance wireless device (5).

2. The air conditioning system (1) according to Claim 1,
wherein the air conditioning control device (6) includes a storage unit (62) configured to store the information received from the short-distance wireless device (5).

3. The air conditioning system (1) according to Claim 2,
wherein the air conditioning control device (6) includes a failure determination unit (63) configured to perform a failure determination on the basis of the information stored in the storage unit (62).

4. The air conditioning system (1) according to any one of Claims 1 to 3,
wherein the outdoor unit (2) includes
a liquid bypass pipe (L3) configured to supply a liquid refrigerant output from an outdoor heat exchanger (13) to a suction-side pipe (L1) of a compressor (11), and
a liquid bypass valve (18) provided in the liquid bypass pipe (L3),
wherein the short-distance wireless device (5) is configured to receive opening-closing information on the liquid bypass valve (18) as the sensor information, and
wherein the control parameter changing unit (61) is configured to lower a target superheat degree, in a case where the number of times of opening and closing of the liquid bypass valve (18) within a predetermined time is equal to or more than a predetermined number of times.

5. The air conditioning system (1) according to any one of Claims 1 to 4,
wherein the outdoor unit (2) includes
a hot gas bypass pipe (L5) configured to connect a discharge-side pipe of a compressor (11) and an inlet-side pipe of an outdoor heat exchanger (13) during heating to each other, and
a hot gas bypass valve (19) provided in the hot gas bypass pipe (L5),
wherein the short-distance wireless device (5) is configured to receive opening-closing information on the hot gas bypass valve (19) as the sensor information, and
wherein the control parameter changing unit (61) is configured to raise a target superheat degree or lowers a rotational speed of an outdoor fan (15), in a case where the number of times of opening and closing of the hot gas bypass valve (19) within a predetermined time is equal to or more than a predetermined number of times.

6. The air conditioning system (1) according to any one of Claims 1 to 5,
wherein the outdoor unit (2) includes a heating expansion valve (17),
wherein the indoor unit (3a, 3b) includes a cooling expansion valve (31),
wherein the short-distance wireless device (5) is configured to receive valve opening degree information on the heating expansion valve as (17) the sensor information, and
wherein the control parameter changing unit (61) is configured to lower a target supercooling degree, in a case where the number of times at which the valve opening degree of the heating expansion valve (17) exceeds a predetermined threshold value is equal to or more than a predetermined number of times within a predetermined time.

7. The air conditioning system (1) according to any one of Claims 1 to 5,
wherein the outdoor unit (2) includes a heating expansion valve (17),
wherein the indoor unit (3a, 3b) includes a cooling expansion valve (31),
wherein the short-distance wireless device (5) is configured to receive valve opening degree information on the cooling expansion valve (31) as the sensor information, and
wherein the control parameter changing unit (61) is configured to lower a rotational speed of an outdoor fan (15), in a case where the number of times at which the valve opening degree of the cooling expansion valve (31) exceeds a predetermined threshold value is equal to or more than a predetermined number of times within a predetermined time.

8. The air conditioning system (1) according to any one of Claims 1 to 7,
wherein the outdoor unit (2) includes at least one of a discharge temperature sensor (45) configured to detect a temperature on a refrigerant discharge side of a compressor (11), a suction temperature sensor (46) configured to detect a temperature on a refrigerant suction side of the compressor (11), and a below-dome temperature sensor (47) configured to detect a temperature of below a dome of the compressor (11),
wherein the short-distance wireless device (5) is configured to receive temperature information of at least any of the discharge temperature sensor (45), the suction temperature sensor (46), and the below-dome temperature sensor (47) provided in the outdoor unit (2) as the sensor information, and
wherein the control parameter changing unit (61) configured to lower a target superheat degree, in a case where the number of times at which the temperature exceeds a predetermined threshold value is equal to or more than a predetermined number of times within a predetermined time.

9. An air conditioning system (1) in which one outdoor unit (2) and at least one indoor unit (3a, 3b) are connected to each other by a common refrigerant pipe, the air conditioning system (1) **characterized by**
a short-distance wireless device (5) configured to transmit positional information, and
an air conditioning control device (6) that is provided so as to communicate with the short-distance wireless device (5) and is configured to receive the positional information from the short-distance wireless device (5),
wherein the air conditioning control device (6) includes a control parameter changing unit (61) configured to change a control parameter of an air conditioning control on the basis of the positional information, and wherein in a case where a plurality of the indoor units (3a, 3b) are connected to the outdoor unit (2),
the short-distance wireless device (5) is configured to transmit the positional information to the air conditioning control device (6), and
the air conditioning control device (6) is configured to specify a positional relationship between the indoor units (3a, 3b) on the basis of the positional information and to change the control parameter of at least one of the indoor units (3a, 3b) in accordance with the specified positional relationship.

10. The air conditioning system (1) according to Claim 9,
wherein the air conditioning control device (6) includes a storage unit (62) configured to store the information received from the short-distance wireless device (5).

11. The air conditioning system (1) according to Claim 10,
wherein the air conditioning control device (6) includes a failure determination unit (63) configured to perform a failure determination on the basis of the information stored in the storage unit (62).

12. An air conditioning system (1) in which one outdoor unit (2) and at least one indoor unit (3a, 3b) are connected to each other by a common refrigerant pipe, the air conditioning system (1) comprising:
a plurality of sensors configured to detect information relating to a state of a refrigerant or a state of a device or a valve provided in the outdoor unit (2) or the indoor unit (3a, 3b); and
a short-distance wireless device (5) that is connected to at least one of the sensors and is configured to receive sensor information from the connected sensor,
**characterized in that** the short-distance wireless device (5) includes a control parameter changing unit configured to change a control parameter of an air conditioning control on the basis of the sensor information or information relating to the sensor information and
an abnormality detection unit that detects an abnormality on the basis of the sensor information, and
wherein the control parameter changing unit changes the control parameter in accordance with an abnormality detection result, in a case where an abnormality is detected by the abnormality detection unit.

## Patentansprüche

1. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) Folgendes umfasst:
eine Vielzahl von Sensoren, die dazu ausgelegt sind, Informationen zu detektieren, die einen Zustand eines Kältemittels oder einen Zustand einer Vorrichtung oder eines Ventils, die in der Außeneinheit (2) oder in der Inneneinheit (3a, 3b) bereitgestellt sind, betreffen;
eine drahtlose Kurzstreckenvorrichtung (5), die mit mindestens einem der Sensoren verbunden und dazu ausgelegt ist, Sensorinformationen vom verbundenen Sensor zu empfangen; und
eine Klimatisierungssteuervorrichtung (6), die bereitgestellt ist, um mit der drahtlosen Kurzstreckenvorrichtung (5) zu kommunizieren, und dazu ausgelegt ist, die Sensorinformationen oder Informationen, die die Sensorinformationen betreffen, von der drahtlosen Kurzstreckenvorrichtung (5) zu empfangen, und
wobei die Klimatisierungssteuervorrichtung (6) eine Steuerparameteränderungseinheit (61) beinhaltet, die dazu ausgelegt ist, einen Steuerparameter einer Klimatisierungssteuerung auf Basis der Sensorinformationen oder der Informationen, die die Sensorinformationen betreffen, zu ändern, **dadurch gekennzeichnet, dass** die drahtlose Kurzstreckenvorrichtung (5) Folgendes beinhaltet
eine Anomaliedetektionseinheit (57) zum Detektieren einer Anomalie auf Basis der Sensorinformationen, und
eine drahtlose Kommunikationseinheit, die dazu ausgelegt ist, in einem Fall, in dem eine Anomalie von der Anomaliedetektionseinheit (57) detektiert wird, ein Anomaliesignal, das in der Lage ist, die detektierte Anomalie zu spezifizieren, zur Klimatisierungssteuervorrichtung als die Informationen zu übertragen, die die Sensorinformationen betreffen,
wobei die Steuerparameteränderungseinheit (61) dazu ausgelegt ist, in einem Fall, in dem das Anomaliesignal von der drahtlosen Kurzstreckenvorrichtung (5) empfangen wird, den Steuerparameter gemäß dem Anomaliesignal zu ändern.

2. Klimatisierungssystem (1) nach Anspruch 1,
wobei die Klimatisierungssteuervorrichtung (6) eine Speichereinheit (62) beinhaltet, die dazu ausgelegt ist, die Informationen, die von der drahtlosen Kurzstreckenvorrichtung (5) empfangen werden, zu speichern.

3. Klimatisierungssystem (1) nach Anspruch 2,
wobei die Klimatisierungssteuervorrichtung (6) eine Fehlerbestimmungseinheit (63) beinhaltet, die dazu ausgelegt ist, auf Basis der Informationen, die in der Speichereinheit (62) gespeichert sind, eine Fehlerbestimmung durchzuführen.

4. Klimatisierungssystem (1) nach einem der Ansprüche 1 bis 3,
wobei die Außeneinheit (2) Folgendes beinhaltet
eine Flüssigkeitsbypassleitung (L3), die dazu ausgelegt ist, einer ansaugseitigen Leitung (L1) eines Verdichters (11) ein flüssiges Kältemittel, das von einem Außenwärmetauscher (13) ausgegeben wird, zuzuführen, und
ein Flüssigkeitsbypassventil (18) das in der Flüssigkeitsbypassleitung (L3) bereitgestellt ist,
wobei die drahtlose Kurzstreckenvorrichtung (5) dazu ausgelegt ist, Öffnungs-/Schließinformationen über das Flüssigkeitsbypassventil (18) als die Sensorinformationen zu empfangen, und
wobei die Steuerparameteränderungseinheit (61) dazu ausgelegt ist, in einem Fall, in dem die Häufigkeit des Öffnens und des Schließens des Flüssigkeitsbypassventils (18) innerhalb einer vorbestimmten Zeit gleich oder größer ist als eine vorbestimmte Häufigkeit, einen Überhitzungssollgrad zu verringern.

5. Klimatisierungssystem (1) nach einem der Ansprüche 1 bis 4,
wobei die Außeneinheit (2) Folgendes beinhaltet
eine Heißgasbypassleitung (L5), die dazu ausgelegt ist, während des Erwärmens eine auslassseitige Leitung eines Verdichters (11) und eine einlassseitige Leitung eines Außenwärmetauschers (13) miteinander zu verbinden, und
ein Heißgasbypassventil (19), das in der Heißgasbypassleitung (L5) bereitgestellt ist,
wobei die drahtlose Kurzstreckenvorrichtung (5) dazu ausgelegt ist, Öffnungs-/Schließinformationen über das Heißgasbypassventil (19) als die Sensorinformationen zu empfangen, und
wobei die Steuerparameteränderungseinheit (61) dazu ausgelegt ist, in einem Fall, in dem die Häufigkeit des Öffnens und des Schließens des Heißgasbypassventils (19) innerhalb einer vorbestimmten Zeit gleich oder größer ist als eine vorbestimmte Häufigkeit, einen Überhitzungssollgrad zu erhöhen oder eine Drehgeschwindigkeit eines Außenlüfters (15) zu verringern.

6. Klimatisierungssystem (1) nach einem der Ansprüche 1 bis 5,
wobei die Außeneinheit (2) ein Heizungsexpansionsventil (17) beinhaltet,
wobei die Inneneinheit (3a, 3b) ein Kühlungsexpansionsventil (31) beinhaltet,
wobei die drahtlose Kurzstreckenvorrichtung (5) dazu ausgelegt ist, Ventilöffnungsgradinformationen über das Heizungsexpansionsventil (17) als die Sensorinformationen zu empfangen; und
wobei die Steuerparameteränderungseinheit (61) dazu ausgelegt ist, in einem Fall, in dem die Häufigkeit, mit der der Ventilöffnungsgrad des Heizungsexpansionsventils (17) innerhalb einer vorbestimmten Zeit einen vorbestimmten Schwellwert überschreitet, gleich oder größer als eine vorbestimmte Häufigkeit ist, einen Unterkühlungssollgrad zu verringern.

7. Klimatisierungssystem (1) nach einem der Ansprüche 1 bis 5,
wobei die Außeneinheit (2) ein Heizungsexpansionsventil (17) beinhaltet,
wobei die Inneneinheit (3a, 3b) ein Kühlungsexpansionsventil (31) beinhaltet,
wobei die drahtlose Kurzstreckenvorrichtung (5) dazu ausgelegt ist, Ventilöffnungsgradinformationen über das Kühlungsexpansionsventil (31) als die Sensorinformationen zu empfangen, und
wobei die Steuerparameteränderungseinheit (61) dazu ausgelegt ist, in einem Fall, in dem die Häufigkeit, mit der der Ventilöffnungsgrad des Kühlungsexpansionsventils (31) innerhalb einer vorbestimmten Zeit einen vorbestimmten Schwellwert überschreitet, gleich oder größer als eine vorbestimmte Häufigkeit ist, eine Drehgeschwindigkeit eines Außenlüfters (15) zu verringern.

8. Klimatisierungssystem (1) nach einem der Ansprüche 1 bis 7,
wobei die Außeneinheit (2) mindestens eines von einem Auslasstemperatursensor (45), der dazu ausgelegt ist, auf einer Kältemittelauslassseite eines Verdichters (11) eine Temperatur zu detektieren, einen Ansaugtemperatursensor (46), der dazu ausgelegt ist, auf einer Kältemittelansaugseite des Verdichters (11) eine Temperatur zu detektieren, und einen Unterkuppeltemperatursensor (47), der dazu ausgelegt ist, eine Temperatur unter einer Kuppel des Verdichters (11) zu detektieren, beinhaltet,
wobei die drahtlose Kurzstreckenvorrichtung (5) dazu ausgelegt ist, Temperaturinformationen von mindestens einem des Auslasstemperatursensors (45), des Ansaugtemperatursensors (46) und des Unterkuppeltemperatursensors (47), die in der Außeneinheit (2) bereitgestellt sind, als die Sensorinformationen zu empfangen, und
wobei die Steuerparameteränderungseinheit (61) dazu ausgelegt ist, in einem Fall, in dem die Häufigkeit, mit der die Temperatur innerhalb einer vorbestimmten Zeit einen vorbestimmten Schwellwert überschreitet, gleich oder größer ist als eine vorbestimmte Häufigkeit, einen Überhitzungssollgrad zu verringern.

9. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) durch Folgendes gekennzeichnet ist
eine drahtlose Kurzstreckenvorrichtung (5), die dazu ausgelegt ist, Positionsinformationen zu übertragen, und
eine Klimatisierungssteuervorrichtung (6), die bereitgestellt ist, um mit der drahtlosen Kurzstreckenvorrichtung (5) zu kommunizieren, und dazu ausgelegt ist, die Positionsinformationen von der drahtlosen Kurzstreckenvorrichtung (5) zu empfangen,
wobei die Klimatisierungssteuervorrichtung (6) eine Steuerparameteränderungseinheit (61) beinhaltet, die dazu ausgelegt ist, einen Steuerparameter einer Klimatisierungssteuerung auf Basis der Positionsinformationen zu ändern,
und
wobei in einem Fall, in dem eine Vielzahl der Inneneinheiten (3a, 3b) mit der Außeneinheit (2) verbunden sind,
die drahtlose Kurzstreckenvorrichtung (5) dazu ausgelegt ist, die Positionsinformationen zur Klimatisierungssteuervorrichtung (6) zu übertragen, und
die Klimatisierungssteuervorrichtung (6) dazu ausgelegt ist, auf Basis der Positionsinformationen eine Positionsbeziehung zwischen den Inneneinheiten (3a, 3b) zu spezifizieren und den Steuerparameter von mindestens einer der Inneneinheiten (3a, 3b) gemäß der spezifizierten Positionsbeziehung zu ändern.

10. Klimatisierungssystem (1) nach Anspruch 9,
wobei die Klimatisierungssteuervorrichtung (6) eine Speichereinheit (62) beinhaltet, die dazu ausgelegt ist, die Informationen, die von der drahtlosen Kurzstreckenvorrichtung (5) empfangen werden, zu speichern.

11. Klimatisierungssystem (1) nach Anspruch 10,
wobei die Klimatisierungssteuervorrichtung (6) eine Fehlerbestimmungseinheit (63) beinhaltet, die dazu ausgelegt ist, auf Basis der Informationen, die in der Speichereinheit (62) gespeichert sind, eine Fehlerbestimmung durchzuführen.

12. Klimatisierungssystem (1), bei dem eine Außeneinheit (2) und mindestens eine Inneneinheit (3a, 3b) über eine gemeinsame Kältemittelleitung miteinander verbunden sind, wobei das Klimatisierungssystem (1) Folgendes umfasst:
eine Vielzahl von Sensoren, die dazu ausgelegt sind, Informationen zu detektieren, die einen Zustand eines Kältemittels oder einen Zustand einer Vorrichtung oder eines Ventils, die in der Außeneinheit (2) oder in der Inneneinheit (3a, 3b) bereitgestellt sind, betreffen; und
eine drahtlose Kurzstreckenvorrichtung (5), die mit mindestens einem der Sensoren verbunden und dazu ausgelegt ist, Sensorinformationen vom verbundenen Sensor zu empfangen,
**dadurch gekennzeichnet, dass** die drahtlose Kurzstreckenvorrichtung (5) eine Steuerparameteränderungseinheit beinhaltet, die dazu ausgelegt ist, auf Basis der Sensorinformationen oder von Informationen, die die Sensorinformationen betreffen, einen Steuerparameter der Klimatisierungssteuerung zu ändern, und
eine Anomaliedetektionseinheit, die eine Anomalie auf Basis der Sensorinformationen detektiert, und
wobei die Steuerparameteränderungseinheit in einem Fall, in dem von der Anomaliedetektionseinheit eine Anomalie detektiert wird, den Steuerparameter gemäß einem Anomaliedetektionsergebnis ändert.

## Revendications

1. Système de climatisation (1) dans lequel une unité extérieure (2) et au moins une unité intérieure (3a, 3b) sont connectées entre elles par un tuyau de réfrigération commun, le système de climatisation (1) comprenant :
une pluralité de capteurs configurés pour détecter des informations relatives à un état d'un réfrigérant ou un état d'un dispositif ou d'une vanne prévus dans l'unité extérieure (2) ou l'unité intérieure (3a, 3b) ;
un dispositif sans fil à courte distance (5) qui est connecté à au moins un des capteurs et qui est configuré pour recevoir des informations de capteur à partir du capteur connecté ; et
un dispositif de commande de climatisation (6) qui est fourni de manière à communiquer avec le dispositif sans fil à courte distance (5) et qui est configuré pour recevoir les informations de capteur ou des informations relatives aux informations de capteur à partir du dispositif sans fil à courte distance (5), et
dans lequel le dispositif de commande de climatisation (6) comporte une unité de modification de paramètres de commande (61) configurée pour modifier un paramètre de commande d'une commande de climatisation sur la base des informations de capteur ou des informations relatives aux informations de capteur, **caractérisé en ce que** le dispositif sans fil à courte distance (5) comporte
une unité de détection des anomalies (57) pour détecter une anomalie sur la base des informations de capteur, et
une unité de communication sans fil configurée pour transmettre un signal d'anomalie en mesure de spécifier l'anomalie détectée au dispositif de commande de climatisation sous la forme d'informations relatives aux informations de capteur, dans un cas où une anomalie est détectée par l'unité de détection des anomalies (57),
dans lequel l'unité de modification de paramètres de commande (61) est configurée pour modifier le paramètre de commande conformément au signal d'anomalie, dans un cas où le signal d'anomalie est reçu à partir du dispositif sans fil à courte distance (5).

2. Système de climatisation (1) selon la revendication 1,
dans lequel le dispositif de commande de climatisation (6) comporte une unité de stockage (62) configurée pour stocker les informations reçues à partir du dispositif sans fil à courte distance (5).

3. Système de climatisation (1) selon la revendication 2,
dans lequel le dispositif de commande de climatisation (6) comporte une unité de détermination des défaillances (63) configurée pour réaliser une détermination de défaillance sur la base des informations stockées dans l'unité de stockage (62).

4. Système de climatisation (1) selon l'une quelconque des revendications 1 à 3,
dans lequel l'unité extérieure (2) comporte
un tuyau de dérivation de liquide (L3) configuré pour fournir une sortie de réfrigérant liquide, d'un échangeur de chaleur extérieur (13) à un tuyau côté aspiration (L1) d'un compresseur (11), et
une vanne de dérivation de liquide (18) prévue dans le tuyau de dérivation de liquide (L3),
dans lequel le dispositif sans fil à courte distance (5) est configuré pour recevoir des informations d'ouverture-fermeture sur la vanne de dérivation de liquide (18) sous la forme d'informations de capteur, et
dans lequel l'unité de modification de paramètres de commande (61) est configurée pour abaisser un degré de surchauffe de consigne, dans un cas où le nombre de fois d'ouverture et de fermeture de la vanne de dérivation de liquide (18) en un temps prédéterminé est égal ou supérieur à un nombre prédéterminé de fois.

5. Système de climatisation (1) selon l'une quelconque des revendications 1 à 4,
dans lequel l'unité extérieure (2) comporte
un tuyau de dérivation de gaz chaud (L5) configuré pour connecter l'un à l'autre un tuyau côté refoulement d'un compresseur (11) et un tuyau côté entrée d'un échangeur de chaleur extérieur (13) pendant le chauffage, et
une vanne de dérivation de gaz chaud (19) prévue dans le tuyau de dérivation de gaz chaud (L5),
dans lequel le dispositif sans fil à courte distance (5) est configuré pour recevoir des informations d'ouverture-fermeture sur la vanne de dérivation de gaz chaud (19) sous la forme d'informations de capteur, et
dans lequel l'unité de modification de paramètres de commande (61) est configurée pour élever un degré de surchauffe de consigne ou abaisser une vitesse de rotation d'un ventilateur extérieur (15), dans un cas où le nombre de fois d'ouverture et de fermeture de la vanne de dérivation de gaz chaud (19) en un temps prédéterminé est égal ou supérieur à un nombre prédéterminé de fois.

6. Système de climatisation (1) selon l'une quelconque des revendications 1 à 5,
dans lequel l'unité extérieure (2) comporte une vanne de détente de chauffage (17),
dans lequel l'unité intérieure (3a, 3b) comporte une vanne de détente de refroidissement (31),
dans lequel le dispositif sans fil à courte distance (5) est configuré pour recevoir des informations de degré d'ouverture de vanne sur la vanne de détente de chauffage (17) en tant qu'informations de capteur, et
dans lequel l'unité de modification de paramètres de commande (61) est configurée pour abaisser un degré de sur-refroidissement de consigne, dans un cas où le nombre de fois où le degré d'ouverture de vanne de la vanne de détente de chauffage (17) dépasse une valeur seuil prédéterminée est égal ou supérieur à un nombre prédéterminé de fois en un temps prédéterminé.

7. Système de climatisation (1) selon l'une quelconque des revendications 1 à 5,
dans lequel l'unité extérieure (2) comporte une vanne de détente de chauffage (17),
dans lequel l'unité intérieure (3a, 3b) comporte une vanne de détente de refroidissement (31),
dans lequel le dispositif sans fil à courte distance (5) est configuré pour recevoir des informations de degré d'ouverture de vanne sur la vanne de détente de refroidissement (31) sous la forme d'informations de capteur, et
dans lequel l'unité de modification de paramètres de commande (61) est configurée pour abaisser une vitesse de rotation d'un ventilateur extérieur (15), dans un cas où le nombre de fois où le degré d'ouverture de vanne de la vanne de détente de refroidissement (31) dépasse une valeur seuil prédéterminée est égal ou supérieur à un nombre prédéterminé de fois en un temps prédéterminé.

8. Système de climatisation (1) selon l'une quelconque des revendications 1 à 7,
dans lequel l'unité extérieure (2) comporte au moins l'un parmi un capteur de température de refoulement (45) configuré pour détecter une température sur un côté de refoulement de réfrigérant d'un compresseur (11), un capteur de température d'aspiration (46) configuré pour détecter une température sur un côté d'aspiration de réfrigérant du compresseur (11), et un capteur de température sous dôme (47) configuré pour détecter une température de sous un dôme du compresseur (11),
dans lequel le dispositif sans fil à courte distance (5) est configuré pour recevoir des informations de température d'au moins l'un quelconque parmi le capteur de température de refoulement (45), le capteur de température d'aspiration (46), et le capteur de température sous dôme (47) prévus dans l'unité extérieure (2) sous la forme d'informations de capteur, et
dans lequel l'unité de modification de paramètres de commande (61) est configurée pour abaisser un degré de surchauffe de consigne, dans un cas où le nombre de fois où la température dépasse une valeur seuil prédéterminée est égal ou supérieur à un nombre prédéterminé de fois en un temps prédéterminé.

9. Système de climatisation (1) dans lequel une unité extérieure (2) et au moins une unité intérieure (3a, 3b) sont connectées entre elles par un tuyau de réfrigération commun, le système de climatisation (1) étant **caractérisé par**
un dispositif sans fil à courte distance (5) configuré pour transmettre des informations de position, et
un dispositif de commande de climatisation (6) qui est fourni de manière à communiquer avec le dispositif sans fil à courte distance (5) et qui est configuré pour recevoir les informations de position à partir du dispositif sans fil à courte distance (5),
dans lequel le dispositif de commande de climatisation (6) comporte une unité de modification de paramètres de commande (61) configurée pour modifier un paramètre de commande d'une commande de climatisation sur la base des informations de position, et dans lequel, dans un cas où une pluralité des unités intérieures (3a, 3b) sont connectées à l'unité extérieure (2),
le dispositif sans fil à courte distance (5) est configuré pour transmettre les informations de position au dispositif de commande de climatisation (6), et
le dispositif de commande de climatisation (6) est configuré pour spécifier une relation de position entre les unités intérieures (3a, 3b) sur la base des informations de position et pour modifier le paramètre de commande d'au moins une des unités intérieures (3a, 3b) conformément à la relation de position spécifiée.

10. Système de climatisation (1) selon la revendication 9,
dans lequel le dispositif de commande de climatisation (6) comporte une unité de stockage (62) configurée pour stocker les informations reçues à partir du dispositif sans fil à courte distance (5).

11. Système de climatisation (1) selon la revendication 10,
dans lequel le dispositif de commande de climatisation (6) comporte une unité de détermination des défaillances (63) configurée pour réaliser une détermination de défaillance sur la base des informations stockées dans l'unité de stockage (62).

12. Système de climatisation (1) dans lequel une unité extérieure (2) et au moins une unité intérieure (3a, 3b) sont connectées entre elles par un tuyau de réfrigération commun, le système de climatisation (1) comprenant :
une pluralité de capteurs configurés pour détecter des informations relatives à un état d'un réfrigérant ou un état d'un dispositif ou d'une vanne prévus dans l'unité extérieure (2) ou l'unité intérieure (3a, 3b) ; et
un dispositif sans fil à courte distance (5) qui est connecté à au moins un des capteurs et qui est configuré pour recevoir des informations de capteur à partir du capteur connecté,
**caractérisé en ce que** le dispositif sans fil à courte distance (5) comporte une unité de modification de paramètres de commande configuré pour modifier un paramètre de commande d'une commande de climatisation sur la base des informations de capteur ou des informations relatives aux informations de capteur et
une unité de détection des anomalies qui détecte une anomalie sur la base des informations de capteur, et
dans lequel l'unité de modification de paramètres de commande change le paramètre de commande conformément à un résultat de détection d'anomalie, dans un cas où une anomalie est détectée par l'unité de détection des anomalies.
